# EUROPEAN PATENT SPECIFICATION

(11) **EP 3 139 299 B1**
(45) Date of publication and mention of the grant of the patent: **29.04.2020**
(21) Application number: 15835637.8
(22) Date of filing: 27.01.2015
(51) Int. Cl.: G06F 8/61, G06F 8/60, F24F 11/89, G06F 21/57, G06F 21/12, G06F 9/445

(54) **CONTROL PROGRAM DELIVERY SYSTEM AND METHOD THEREFOR**
STEUERUNGSPROGRAMMBEREITSTELLUNGSSYSTEM UND VERFAHREN DAFÜR
SYSTÈME DE DÉLIVRANCE DE PROGRAMME DE COMMANDE ET PROCÉDÉ ASSOCIÉ

(30) Priority: 28.08.2014 JP 2014174079
(43) Date of publication of application: 08.03.2017
(73) Proprietor: Mitsubishi Heavy Industries, Ltd., Tokyo 108-8215 (JP)
(72) Inventor: ITO, Takahide, Tokyo 108-8215 (JP); ENYA, Atsushi, Tokyo 108-8215 (JP); MATSUO, Minoru, Tokyo 108-8215 (JP); ITOU, Takehiko, Tokyo 108-8215 (JP)
(74) Representative: Cabinet Beau de Loménie
(86) International application number: PCT/JP2015/052236
(87) International publication number: WO 2016/031260

(56) References cited:
- EP-A1- 1 720 321
- EP-A2- 2 306 359
- WO-A1-02/33522
- WO-A1-2011/042892
- JP-A- 2003 111 170
- JP-A- 2007 148 806
- JP-A- 2009 124 520
- JP-A- 2010 218 410
- JP-A- 2013 142 994
- US-A1- 2004 123 091
- US-A1- 2009 077 634
- US-A1- 2011 145 395
- US-B1- 7 308 718

## Description

### Technical Field

The present invention relates to a control program delivery system and a method therefor.

### Background Art

In general, for example, a multi-type air conditioning system including a single outdoor machine and a plurality of indoor machines connected to each other is known (for example, see PTL 1). In such a multi-type air conditioning system, an outdoor machine control unit is provided in the outdoor machine, and each indoor machine control unit is provided in each indoor machine.

In general, during the construction of such an air conditioning system, the indoor machines and the outdoor machine are shipped from a factory in a state where control programs have been previously written into the outdoor machine control unit and the indoor machine control units, and an assembly work is performed in the field.
US2009077634 (A1) discloses a firmware update system. When the system boots, the device executes the boot clock code, and determines whether an update alert exists. When the system boots, the network interface controller connects to a web server via Internet, downloads firmware from the web server, and generates the update alert after the firmware is downloaded. EP1720321 (A1) describes a data transmission device and a data structure, in which various data can be transmitted corresponding to a combination of a plurality of storage mediums.
WO0233522 (A1) refers to a "personalized" computer with a unique digital signature which will not boot up or recognize any data storage or communication peripheral devices without a matching "personalized" smart card.
US7308718 (B1) relates to a technique for remotely configuring a system through a communications network in a secure manner.
US2004123091 (A1) discloses an automated configuration of multiple devices within a computer network.
From US2011145395 (A1) an air conditioning system for performing monitoring of devices is known.

EP2306359 discloses a program licence management technique.

### Citation List

### Patent Literature

[PTL 1] Japanese Unexamined Patent Application Publication No. 2009-186144

### Summary of Invention

### Technical Problem

In the related art described above, since the indoor machine and the outdoor machine are shipped from a factory in a state where control programs have been previously written into the outdoor machine control unit and the indoor machine control unit, there is a concern that the control programs may be illegally duplicated and used.

An object of the present invention is to provide a control program delivery system and a method therefor which are capable of reducing a risk of unauthorized use of a control program. Solution to Problem

The present invention relates to a control program delivery system according to claim 1 and a control program delivery method according to claim 6.

A first aspect of the present disclosure is a control program delivery system including a control device including non-rewritable first storage means for storing first authentication information which is encrypted, and rewritable second storage means; and a server that delivers a control program, in which the control device includes transmission means for transmitting the first authentication information to the server, and write means for writing the control program into the second storage means, in a case of receiving the control program from the server, the server includes reception means for receiving the first authentication information from the control device; authentication means for verifying whether or not the control device has a legitimate authority, based on the first authentication information; and transmission means for transmitting the control program to the control device, in a case where the control device has a legitimate authority, and the control program includes a step of authenticating the first authentication information, when execution of the program is started, and a step of permitting the execution of the program, only in a case where the first authentication information is authenticated.

According to the control program delivery system, the server authenticates the first authentication information in a case of receiving the first authentication information from the control device, and transmits the control program to the control device in a case where the control device has a legitimate authority. Upon receiving the control program from the server, the control device writes the control program into the second rewritable storage means. This allows the control program to be in an executable state.

In this way, since it is configured that the control program is delivered from the server to the control device, it is possible to conceal the control program. Further, since the control program is generated not to be executed if the first authentication key is not verified, it is possible to disable the operation of the control program on an illegal device without the first authentication key. Thus, it can be anticipated that unauthorized duplication will be prevented. Further, since the first authentication key is encrypted and stored in the non-rewritable first storage means, it becomes possible to prevent the duplication of the first authentication key.

A second aspect of the present disclosure is a control program delivery system including a control device including non-rewritable first storage means for storing first authentication information which is encrypted, and rewritable second storage means; a repeater device to which second authentication information is assigned; and a server that delivers a control program, in which the repeater device includes request means for making a request for transmission of the first authentication information to the control device; first transmission means for transmitting the first authentication information which is received from the control device and its own second authentication information to the server; and second transmission means for transmitting the control program to the control device, in a case of receiving the control program from the server, and the server includes reception means for receiving the first authentication information and the second authentication information from the repeater device; authentication means for verifying whether or not the control device and the repeater device have legitimate authorities, based on the first authentication information and the second authentication information; and transmission means for transmitting the control program to the repeater device, in a case where the control device and the repeater device have the legitimate authorities, and the control device includes write means for writing the control program into the second storage means, in a case of receiving the control program from the repeater device, and the control program includes a step of authenticating the first authentication information, when execution of the program is started, and a step of permitting the execution of the program, only in a case where the first authentication information is authenticated.

According to the control program delivery system, the repeater device makes a request for transmission of the first authentication information to the control device, and upon receiving the first authentication information from the control device in response to this request, the repeater device transmits the received first authentication information and its own second authentication information to the server. When receiving the first authentication information and the second authentication information, the server authenticates them, and upon confirming that the control device and the repeater device have legitimate authorities, the server delivers the control program to the repeater device. The repeater device transmits the received control program to the control device. The control device writes the control program which is received from the repeater device, into the second storage means. This allows the control program to be in an executable state.

In this way, since it is configured that the control program is delivered from the server to the control device through the repeater device, it is possible to conceal the control program. Further, since the control program is generated not to be executed if the first authentication key is not verified, it is possible to disable the operation of the control program on an illegal device without the first authentication key. Thus, the suppression of unauthorized duplication can be expected. Further, since the first authentication key is encrypted and stored in the non-rewritable first storage means, it becomes possible to prevent the duplication of the first authentication key.

Further, since communication between the server and the control device is performed through the repeater device, it is possible to block the connection to the server from a device without the legitimate authority, and it becomes possible to prevent a server from being attacked.

In the control program delivery system, the repeater device may receive device attribute information from the control device, in addition to the first authentication information, and transmit the first authentication information, the device attribute information, and the second authentication information to the server, the server may further include third storage means for storing a control module corresponding to each piece of device attribute, and program generation means for extracting a control module corresponding to the device attribute from the storage means, based on the device attribute information received from the repeater device, and generating a custom control program, and the server may transmit the custom control program to the repeater device.

According to the control program delivery system, it becomes possible to customize the control program depending on the configuration of devices included in the control device. This allows the size of codes of the control program to be reduced.

In the control program delivery system, the server may further include fourth storage means for associating and storing the first authentication information, the device attribute information, and the second authentication information, which are received from the repeater device.

In this manner, since the first authentication information, the device attribute information, and the second authentication information are associated with each other and stored, it is possible to easily manage the number of deliveries of the control program. This allows the counting of royalties to be easily performed.

In the control program delivery system, a plurality of control devices may be connected to a shared network, the repeater device may receive the first authentication information and the device attribute information from each of the control devices connected to the network, associate a plurality of pieces of the first authentication information and a plurality of pieces of the authentication information which are received and the second authentication information, and transmit the associated information to the server, the server may associate and store the plurality of pieces of first authentication information and the plurality of pieces of device attribute information which are received and the second authentication information in the fourth storage means, and transmit the custom control program corresponding to each control device to the repeater device, and the repeater device may transmit the custom control program corresponding to each control device, to each control device.

According to the above configuration, even if there are the plurality of control devices, it is possible to deliver the control program only to a control device having the legitimate authority.

In the control program delivery system, each of the plurality of control devices includes an indoor machine and an outdoor machine.

A third aspect of the present disclosure is a control program delivery method including a step of transmitting first authentication information to a server, by a control device including non-rewritable first storage means for storing the first authentication information which is encrypted, and rewritable second storage means; a step of authenticating the first authentication information and verifying whether or not the control device has a legitimate authority by the server; a step of delivering the control program to the control device by a server, in a case where it is verified that the control device has the legitimate authority; and a step of writing the received control program into the second storage means by the control device, and the control program includes a step of authenticating the first authentication information, when execution of the program starts, and a step of permitting the execution of the program, only if the first authentication information is authenticated.

A fourth aspect of the present disclosure is a control program including a step of transmitting first authentication information to a repeater device including second authentication information, by a control device including non-rewritable first storage means for storing the first authentication information which is encrypted, and rewritable second storage means; a step of transmitting the first authentication information and the second authentication information to the server by the repeater device; a step of authenticating the first authentication information and the second authentication information and verifying whether or not the control device and the repeater device have legitimate authorities by the server; a step of delivering the control program to the repeater device by the server, in a case where it is verified that the control device and the repeater device have the legitimate authority; and a step of transmitting the control program to the control device by the repeater device, and the control program includes a step of authenticating the first authentication information, when the program is executed, and a step of permitting the execution of the program, only if the first authentication information is authenticated.

A fifth aspect of the present disclosure is a control device including non-rewritable first storage means for storing first authentication information which is encrypted, second rewritable storage means for storing a control program; and a processor capable of executing the control program which is stored in the second storage means, and the control program includes a step of authenticating the first authentication information, when execution of the program is started, and a step of permitting the execution of the program, only in a case where the first authentication information is authenticated.

### Advantageous Effects of Invention

According to the present invention, there is an effect of reducing a risk of unauthorized use of the control program being possible.

### Brief Description of Drawings

Fig. 1 is a diagram illustrating an entire configuration of a control program delivery system according to an embodiment of the present invention.
Fig. 2 is a diagram illustrating a refrigerant system of an air conditioning system according to the embodiments of the present invention.
Fig. 3 is a diagram illustrating an electrical configuration of the air conditioning system according to the embodiments of the present invention.
Fig. 4 is a diagram illustrating a hardware configuration of a control unit illustrated in Fig. 3.
Fig. 5 is a functional block diagram of a repeater device illustrated in Fig. 1.
Fig. 6 is a functional block diagram of a server illustrated in Fig. 1.
Fig. 7 is a diagram illustrating an operation of the control program delivery system according to the embodiment of the present invention.
Fig. 8 is a diagram illustrating the operation of the control program delivery system according to the embodiment of the present invention.

### Description of Embodiments

Hereinafter, respective embodiments in a case of applying the control program delivery system and the method therefor according to the present invention to an air conditioning system will be described with reference to the drawings. Here, the application of the control program delivery system of the present invention is not limited to an air conditioning system described below, and can widely be applied to a common system, in order to prevent the unauthorized duplication of the control program. For example, examples of the system to be applied include machine tools or the like.

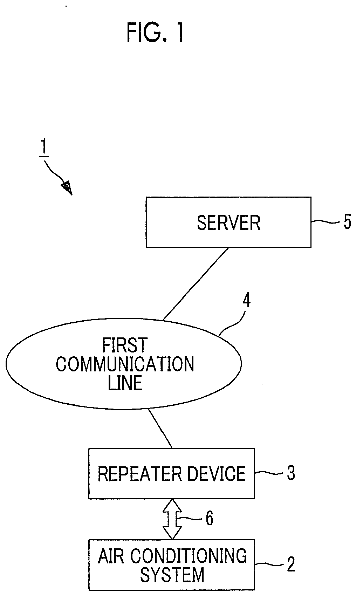

Hereinafter, a control program delivery system and a method therefor according to the embodiment of the present invention will be described with reference to Fig. 1.

Fig. 1 is a diagram illustrating an entire configuration of a control program delivery system according to an embodiment of the present invention. As illustrated in Fig. 1, the control program delivery system 1 has an air conditioning system 2, a repeater device 3, and a server 5 as main components.

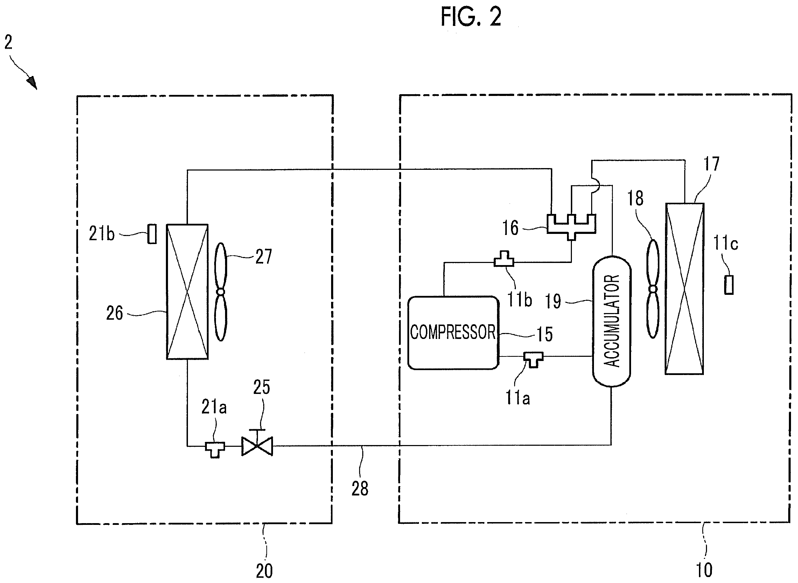

The control program delivery system 1 delivers the control program, for example, to an outdoor machine 10 (see Fig. 2) and an indoor machine 20 (see Fig. 2) constituting the air conditioning system 2 from the server 5 through the repeater device 3, at the time of completion of the construction of the air conditioning system 2, and writes the control program into predetermined memory regions of the outdoor machine 10 and the indoor machine 20 to complete activation.

The repeater device 3 and the server 5 can communicate with each other, for example, through a first communication line 4. The repeater device 3 and the air conditioning system 2 are configured to be able to communicate with each other, through a second communication line 6 (for example, a common bus).

Fig. 2 is a diagram illustrating a refrigerant system of the air conditioning system 2. As illustrated in Fig. 2, the air conditioning system 2 includes the outdoor machine 10, and the indoor machine 20 which is connected through a refrigerant pipe 28 which is common to the outdoor machine 10. Although Fig. 1 illustrates a case where the air conditioning system 2 includes a single outdoor machine 10 and a single indoor machine 20, the number of outdoor machines 10 and indoor machines 20 constituting the air conditioning system 2 is not limited to this example.

Further, in a case where the air conditioning system 2 is configured with a plurality of outdoor machines 10 and a plurality of indoor machines 20, all of the outdoor machines 10 and all of the indoor machines 20 need not necessarily to be connected through common refrigerant pipes. For example, the air conditioning system 2 may be configured with a plurality of air conditioners including at least one outdoor machine 10 and at least one indoor machine 20.

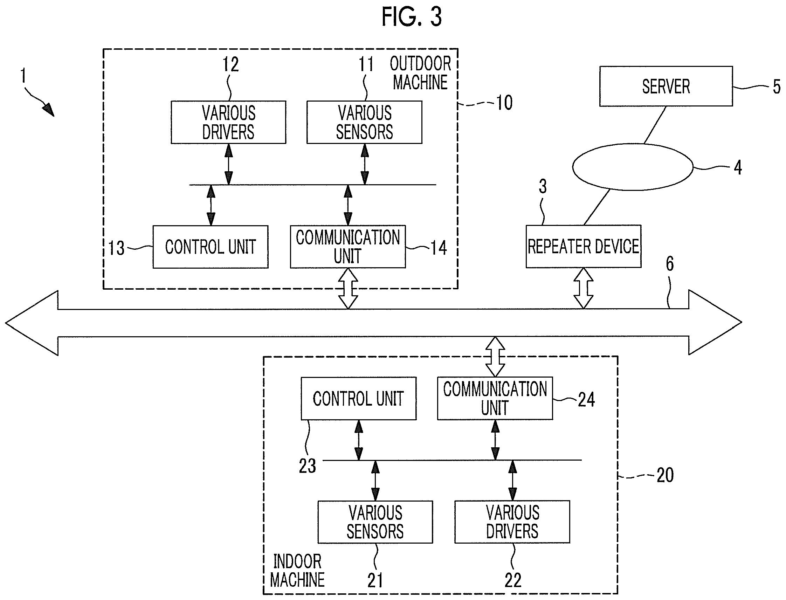

As illustrated in Fig. 2, the outdoor machine 10 includes, for example, a compressor 15 that compresses and sends refrigerant, a four-way valve 16 that switches the direction of circulation of the refrigerant, an outdoor heat exchanger 17 that performs heat exchange between the refrigerant and the outside air, an outdoor fan 18, and accumulator 19 which is provided in the suction side pipe of the compressor 15 for the purpose of vapor-liquid separation and the like of the refrigerant, or the like. The outdoor machine 10 includes various sensors 11 (see Fig. 3) such as a pressure sensor 11a that measures a low pressure-side pressure, a pressure sensor 11b that measures a high pressure-side pressure, and a temperature sensor 11c that measures the temperature of an outdoor heat exchanger 17.

The indoor machine 20 includes an electronic expansion valve 25, an indoor heat exchanger 26, and an indoor fan 27. The indoor machine 20 includes various sensors 21 (see Fig. 3) such as a pressure sensor 21a that measures a pressure before (after) the expansion valve, and a temperature sensor 21b that measures the temperature of an indoor heat exchanger 26.

Fig. 3 is a diagram illustrating an electrical configuration of the air conditioning system 2. As illustrated in Fig. 3, the outdoor machine 10 and the indoor machine 20 are configured to be able to communicate with each other, through the second communication line 6. The repeater device 3 is configured to be connectable to the second communication line 6, and is configured to be able to communicate with the outdoor machine 10 and the indoor machine 20 through the second communication line 6.

The outdoor machine 10 includes various sensors 11 including the pressure sensors 11a and 11b and the temperature sensor 11c, various drivers 12 that controls various device elements (for example, the compressor 15, the outdoor fan 18, or the like) constituting the outdoor machine 10, a control unit 13 that controls various device elements (for example, the compressor 15, or the like) included in the outdoor machine 10, and a communication unit 14 that performs communication through the second communication line 6.

The indoor machine 20 includes various sensors 21 including the pressure sensor 21a and the temperature sensor 21b, various drivers 22 that controls various device elements (for example, the electronic expansion valve 25, the indoor fan 27, or the like) constituting the indoor machine 20, a control unit 23 that controls various device elements (for example, the electronic expansion valve 25, the indoor fan 27, or the like) included in the indoor machine 20, and a communication unit 24 that performs communication through the second communication line 6.

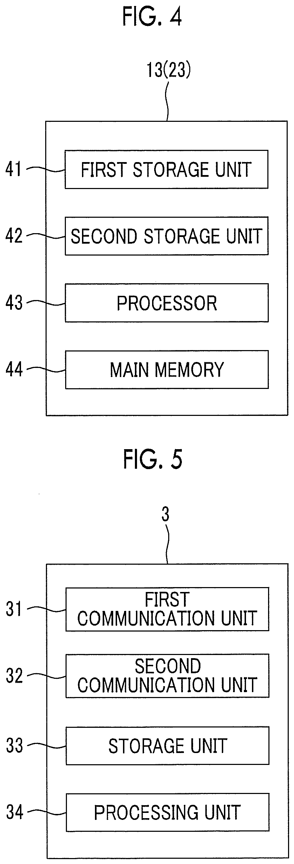

Fig. 4 is a diagram illustrating a hardware configuration of the control units 13 and 23. As illustrated in Fig. 4, the control units 13 and 23 includes a first storage unit 41, a second storage unit 42, a processor 43, and a main memory 44, as main components.

The first storage unit 41 is a non-rewritable recording media, and stores a first authentication key (first authentication information) which is previously encrypted. For example, the first storage unit 41 is a semiconductor memory, and is soldered onto a control board, and mounted on the control units 13 and 23. The first authentication key may be specific information (for example, a specific serial number), and the same information may be used on a per air conditioning system basis. In other words, the first authentication key may not necessarily need specific information.

For example, the first storage unit (semiconductor chip) is distributed to an air conditioner manufacturer that manufactures the air conditioning system 2 from the operation company of the server 5, and the air conditioner manufacturer is obliged to mount the first storage unit 41 onto the outdoor machine 10 and the indoor machine 20. In this way, since the server 5 side authenticates the first authentication key, it is possible to verify whether or not a device is manufactured by an authorized manufacturer.

The second storage unit 42 is a rewritable recording media, and for example, as described later, a control program is written thereinto when the control program is delivered from the server 5. Further, the device attribute information and address information for realizing communication through the second communication line 6 are written into the second storage unit 42 in advance. Here, for example, as the device attribute information, its own attribute information (for example, whether it is the indoor machine or the outdoor machine) and the attribute information of owned devices (for example, capacity, information about mounted sensors, the number of taps of the indoor and outdoor fans, full pulse of the electronic expansion valve, or the like) are stored.

Fig. 5 is a functional block diagram of the repeater device 3. As illustrated in Fig. 5, the repeater device 3 includes a first communication unit 31 that performs communication with the server 5 through the first communication line 4, a second communication unit 32 that performs communication with the outdoor machine 10 and the indoor machine 20 through the second communication line 6, a storage unit 33 that stores a second encrypted authentication key, and a processing unit 34 that performs various processes. The processing unit 34 realizes various processes which will be described later, by a processor such as a CPU executing a predetermined program.

The repeater device 3, for example, is owned by the management company of the air conditioning system 2, and for example, may use the serial number assigned to each management company as the second authentication key. The storage unit 33 in which the second authentication key is stored may be a non-rewritable recording media, or may be a rewritable recording media, similar to the above-mentioned first storage unit 41.

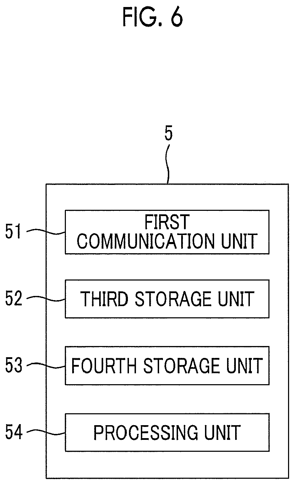

Fig. 6 is a functional block diagram of the server 5. As illustrated in Fig. 6, the server 5 includes a communication unit 51 that performs communication with the repeater device 3 through the first communication line 4, a third storage unit 52 that stores a control program of the outdoor machine 10 and a control program of the indoor machine 20, a fourth storage unit 53 that stores various types of data which are received through the repeater device 3, and a processing unit 54 that performs various processes. The processing unit 54 realizes various processes which will be described later, by a processor such as a CPU executing a predetermined program.

Here, the control program of the outdoor machine 10 and the control program of the indoor machine 20 are provided on a per module basis corresponding to each of units which are respectively mounted onto the outdoor machine 10 and the indoor machine 20. In other words, the control modules are provided corresponding to respective units such as the indoor fan 27, the outdoor fan 18, the electronic expansion valve 25, and the compressor 15, which constitute the outdoor machine 10 and the indoor machine 20.

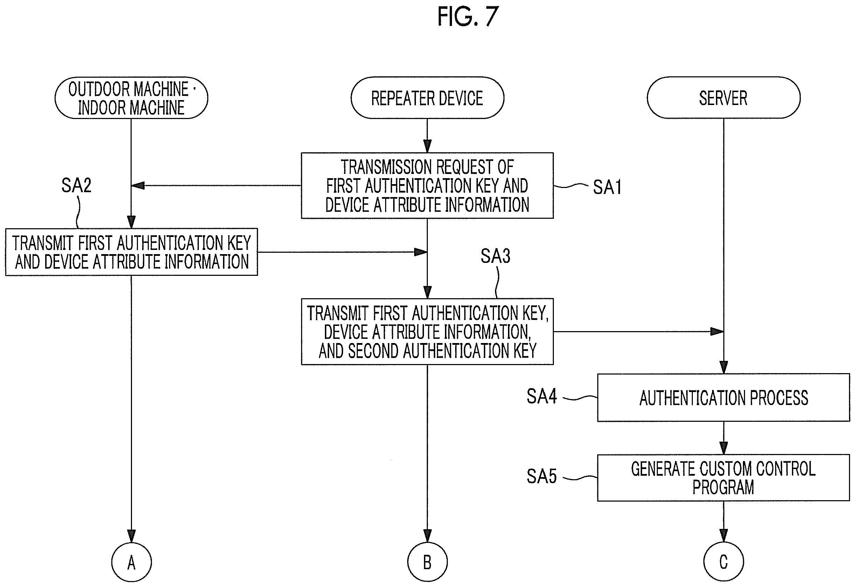

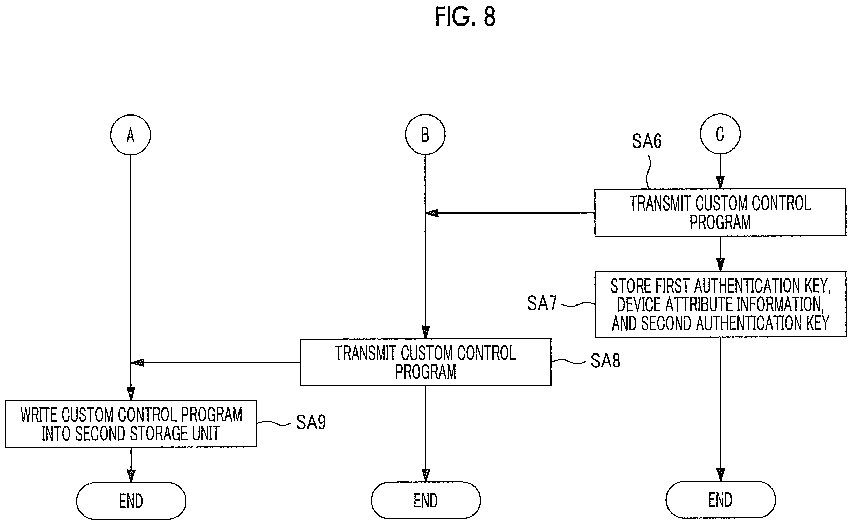

Next, the operation of the control program delivery system with the above configuration will be described with reference to Fig. 7 and Fig. 8.

For example, during installation work of the air conditioning system 2, if the construction is completed by the outdoor machine 10 and the indoor machine 20 being disposed in predetermined positions and connected to the second communication line 6, each power supply is turned on in this state. Thus, for example, the communication functions which are written into the master boot records of the second storage units 42 (see Fig. 4) of the outdoor machine 10 and the indoor machine 20 are respectively enabled.

In this state, the repeater device 3 which is owned by an air management company is connected to the second communication line 6. If a predetermined process such as a connection device request through the second communication line 6 is performed between the repeater device 3, and the outdoor machine 10 and the indoor machine 20, communication is established between the repeater device 3, and the outdoor machine 10 and the indoor machine 20, and the repeater device 3 verifies the configuration of devices connected to the second communication line 6 (in this embodiment, a single outdoor machine and a single indoor machine are connected) and acquires the addresses thereof.

Subsequently, the repeater device 3 broadcasts a transmission request of the first authentication key and the device attribute information to the outdoor machine 10 and the indoor machine 20 (step SA1). The outdoor machine 10 and the indoor machine 20, which receive the transmission request, transmit the first authentication key which is stored in the first storage unit 41 (see Fig. 3) and the device attribute information which is stored in the second storage unit 42, to the repeater device 3 (step SA2).

When receiving the first authentication key and the device attribute information from each of the outdoor machine 10 and the indoor machine 20, the repeater device 3 adds its own second authentication key to the information, and transmits them to the server 5 (step SA3).

When receiving the first authentication key, the device attribute information, and the second authentication key from the repeater device 3, the server 5 decodes the first authentication key, and the second authentication key, and authenticates them (step SA4). For example, it is determined whether or not the first authentication key is present in the first authentication list that the server 5 owns, and in a case where there is a matching first authentication key in the list, it is determined that the device having the first authentication key has a legitimate authority. Thus, the server 5 performs authentication of the repeater device 3, using the second authentication key in this manner.

If it is verified that all of the repeater device 3, the outdoor machine 10 and the indoor machine 20 have legitimate authorities, the server 5 generates respective custom control programs corresponding to the device configurations that the respective devices, in other words, the outdoor machine 10 and the indoor machine 20 respectively have (step SA5). Specifically, the server 5 extracts a control module of a device corresponding to the device attribute information of each of the outdoor machine 10 and the indoor machine 20, from the third storage unit 52 for storing the control module, and generates a custom control program corresponding to each of the outdoor machine 10 and the indoor machine 20. In this manner, it becomes possible to eliminate a control program which is not required for the device configurations of the outdoor machine 10 and the indoor machine 20, and reduce the code size, by customizing the control program corresponding to each device.

In addition, as described above, instead of generating a custom control program on a per control module basis, a general purpose control program of an indoor machine and a general purpose control program of an outdoor machine are prepared, and the general purpose control programs can be used as they are.

If the custom control program corresponding to the outdoor machine 10 and the custom control program corresponding to the indoor machine 20 are generated, the server 5 transmits these custom control programs to the repeater device 3 (step SA6 in Fig. 8).

Here, the custom control program (control program) which is delivered from the server 5 stores a step of verifying the first authentication key stored in the first storage unit 41 during the execution of the program and a step of permitting the execution of the program only in a case where the first authentication key is authenticated. In this manner, since the program is generated not to be executed if the first authentication key is not authenticated, it becomes possible to prevent the illegal execution of the program on devices without the first authentication key.

If the transmission process of the custom control program is completed, the server 5 associates and stores data pieces which are received from the repeater device 3, for example, the first authentication key, the device attribute information, and the second authentication key in the fourth storage unit 53 (step SA7). This allows the number of deliveries of the control program to be easily understood, and the counting of royalties to be to easily performed. In addition, since the second authentication key of the repeater device 3 and the first authentication key are associated, it is possible to easily know which air conditioning system is managed by which air conditioning management company.

If the custom control program of the outdoor machine 10 and the custom control program of the indoor machine 20 are received from the server 5, the repeater device 3 transmits these custom control programs to the outdoor machine 10 and the indoor machine 20 (step SA8).

If the custom control programs are respectively received, the outdoor machine 10 and the indoor machine 20 write the received programs into predetermined memory areas (for example, master boot records) of the second storage units 42 (see Fig. 4) (step SA9). This allows the custom control program to be in an executable state.

In this way, if the download of the custom control program is completed, the repeater device 3 is disconnected from the second communication line 6.

During the start of the air conditioning system 2, the custom control program written into the second storage unit 42 is loaded into the main memory 44 and executed by the processor 43. At this time, the step of verifying the first authentication key stored in the first storage unit 41 is performed, and only if the first authentication key is authenticated, the corresponding control program is continuously executed. This allows the execution of the control program by illegal devices without the first authentication key (the outdoor machine and the indoor machine) to be disabled.

As described above, according to the control program delivery system and the method of the embodiment, since it is configured such that the control program is delivered from the server 5 after the construction of the outdoor machine 10 and the indoor machine 20, it is possible to intend to conceal the control program.

Further, since the first authentication key is encrypted and stored in the non-rewritable first storage unit 41, it becomes possible to prevent the duplication of the first authentication key. Further, since the program is generated not to be executed if the first authentication key is not verified, even if the program is illegally installed in devices without the first authentication key (an outdoor machine and an indoor machine), it is possible to disable the normal operation of the program. This allows a risk of unauthorized use of the control program to be reduced.

Further, since the server 5 associates and has the information of a delivery destination (the first authentication keys of the outdoor machine 10 and the indoor machine 20, and the second authentication key of the repeater device 3), when the control program is delivered, it becomes possible to easily manage the number of deliveries of the control program. As this result, it becomes possible to easily perform the counting of royalties. In addition, since the second authentication key of the repeater device 3 is associated, it is possible to easily know which air conditioning system is managed by which air conditioning management company.

Further, since the control program is transmitted through the repeater device 3, it is possible to block the connection to the server 5 from the device without the legitimate authority, and becomes possible to suppress server attacks.

In the embodiment, information is exchanged between the air conditioning system 2 and the server 5 through the repeater device 3, but instead thereof, it may be configured such that the air conditioning system 2 directly accesses the server 5 without passing through the repeater device 3, and receives the control program. In this case, the outdoor machine 10 and the indoor machine 20 respectively may have functions of establishing communication with the server 5, and it may be possible to realize the exchange of information through a certain device constituting the air conditioning system 2 (for example, the outdoor machine 10) by causing the device to have the communication function that the repeater device 3 has.

In the present embodiment, a description has been given on the delivery of the control program at the time of installation of the air conditioning system 2, but this embodiment can also be applied at the time of update or the like of the control program after installation.

This invention is not limited to the embodiment described above, and various modifications may be performed without departing from the scope of the invention.

### Reference Signs List

- 1: CONTROL PROGRAM DELIVERY SYSTEM
- 2: AIR CONDITIONING SYSTEM
- 3: REPEATER DEVICE
- 4: FIRST COMMUNICATION LINE
- 6: SECOND COMMUNICATION LINE
- 10: OUTDOOR MACHINE
- 13, 23: CONTROL UNIT
- 20: INDOOR MACHINE
- 31: FIRST COMMUNICATION UNIT
- 32: SECOND COMMUNICATION UNIT
- 33: STORAGE UNIT
- 41: FIRST STORAGE UNIT
- 42: SECOND STORAGE UNIT
- 51: COMMUNICATION UNIT
- 52: THIRD STORAGE UNIT
- 53: FOURTH STORAGE UNIT

## Claims

1. A control program delivery system (1) comprising:
a control device (13, 23) including non-rewritable first storage means (41) for storing first authentication information which is encrypted, and rewritable second storage means (42);
a repeater device (3) to which second authentication information is assigned; and
a server (5) for delivering a control program,
wherein the repeater device (3) includes
request means for making a request for transmission of the first authentication information to the control device (13);
first transmission means (31) for transmitting the first authentication information which is received from the control device (13) and its own second authentication information to the server (5); and
second transmission means (32) for transmitting the control program to the control device (13, 23), in a case of receiving the control program from the server (5),
wherein the server (5) includes
reception means for receiving the first authentication information and the second authentication information from the repeater device;
authentication means for verifying whether or not the control device and the repeater device have legitimate authorities by decoding the first authentication information and the second authentication information to determine whether or not the first authentication information and the second authentication information is present in a list owned by the server (5); and
transmission means for transmitting the control program, which is generated by the server (5) not to be executed if the first authentication information is not verified by the control device, to the repeater device, in a case where the control device and the repeater device have legitimate authorities,
wherein the control device (13, 23) includes write means for writing the control program into the second storage means, in a case of receiving the control program from the repeater device, and
wherein the control program is configured to verify the first authentication information stored in the first storage means, when execution of the program is started, and to permit the program to be continuously executed, only in a case where the first authentication information is verified.

2. The control program delivery system (1) according to claim 1,
wherein the repeater device (3) is configured to receive device attribute information from the control device (13, 23), in addition to the first authentication information, and to transmit the first authentication information, the device attribute information, and the second authentication information to the server (5),
wherein the server (5) further includes
third storage means (52) for storing a control module corresponding to each piece of device attribute; and
program generation means for extracting a control module corresponding to the device attribute from the storage means, based on the device attribute information received from the repeater device, and generating a custom control program, and
wherein the server (5) is configured to transmit the custom control program to the repeater device (3).

3. The control program delivery system (1) according to claim 2,
wherein the server (5) further includes fourth storage means (53) for associating and storing the first authentication information, the device attribute information, and the second authentication information, which are received from the repeater device.

4. The control program delivery system (1) according to claim 3,
wherein a plurality of control devices (13, 23) are connected to a shared network (6),
wherein the repeater device (3) is configured to receive the first authentication information and the device attribute information from each of the control devices (13, 23) connected to the network (6), to associate a plurality of pieces of the first authentication information and a plurality of pieces of the device attribute information which are received and the second authentication information, and to transmit the associated information to the server (5),
wherein the server (5) is configured to associate and store the plurality of pieces of first authentication information and the plurality of pieces of device attribute information which are received and the second authentication information in the fourth storage means, and to transmit the custom control program corresponding to each control device to the repeater device (3), and
wherein the repeater device (3) is configured to transmit the custom control program corresponding to each control device, to each control device (13, 23).

5. The control program delivery system (1) according to claim 4,
wherein each of the plurality of control devices (13, 23) includes an indoor machine (20) and an outdoor machine (10).

6. A control program delivery method comprising:
a step of transmitting first authentication information to a repeater device (3) including second authentication information, by a control device (13, 23) including non-rewritable first storage means (41) for storing the first authentication information which is encrypted, and rewritable second storage means (42);
a step of transmitting the first authentication information and the second authentication information to a server (5), by the repeater device;
a step of , by the server, authenticating the first authentication information and the second authentication information and verifying whether or not the control device (13, 23) and the repeater device (3) have the legitimate authority, by decoding the first authentication information and the second authentication information to determine whether or not the first authentication information and the second authentication information is present in a list owned by the server (5);
a step of, by the server, delivering a control program, which is generated by the server (5) not to be executed if the first authentication information is not verified by the control device, to the repeater device (3), in a case where it is verified that the control device (13, 31) and the repeater device (3) have the legitimate authority; and
a step of transmitting the control program to the control device (13 ,31), by the repeater device (3),
wherein the control program includes a step of verifying the first authentication information stored in the first storage means, when execution of the program starts, and a step of permitting the program to be continuously executed, only if the first authentication information is verified.

## Patentansprüche

1. Steuerprogrammliefersystem (1), das Folgendes umfasst:
eine Steuervorrichtung (13, 23), die ein nicht wiederbeschreibbares erstes Speichermittel (41) zum Speichern von ersten Authentifizierungsinformationen, die verschlüsselt sind, und ein wiederbeschreibbares zweites Speichermittel (42) beinhaltet;
eine Repeatervorrichtung (3) der zweite Authentifizierungsinformationen zugewiesen sind; und
einen Server (5) zum Liefern eines Steuerprogramms,
wobei die Repeatervorrichtung (3) Folgendes beinhaltet
ein Anforderungsmittel zum Durchführen einer Anforderung der Übertragung der ersten Authentifizierungsinformationen zur Steuervorrichtung (13);
ein erstes Übertragungsmittel (31) zum Übertragen der ersten Authentifizierungsinformationen, die von der Steuervorrichtung (13) empfangen werden, und seiner eigenen zweiten Authentifizierungsinformationen zum Server (5); und
ein zweites Übertragungsmittel (32) zum Übertragen des Steuerprogramms zur Steuervorrichtung (13, 23) in einem Fall des Empfangens des Steuerprogramms vom Server (5),
wobei der Server (5) Folgendes beinhaltet
ein Empfangsmittel zum Empfangen der ersten Authentifizierungsinformationen und der zweiten Authentifizierungsinformationen von der Repeatervorrichtung;
ein Authentifizierungsmittel zum Verifizieren durch Decodieren der ersten Authentifizierungsinformationen und der zweiten Authentifizierungsinformationen, ob die Steuervorrichtung und die Repeatervorrichtung eine legitime Autorität aufweisen oder nicht, um zu bestimmen, ob die ersten Authentifizierungsinformationen und die zweiten Authentifizierungsinformationen in einer Liste, die sich im Besitz des Servers (5) befindet, vorhanden sind oder nicht; und
ein Übertragungsmittel zum Übertragen des Steuerprogramms, das vom Server (5) erzeugt wird und nicht auszuführen ist, wenn die ersten Authentifizierungsinformationen von der Steuervorrichtung nicht verifiziert werden, zur Repeatervorrichtung in einem Fall, in dem die Steuervorrichtung und die Repeatervorrichtung eine legitime Autorität aufweisen,
wobei die Steuervorrichtung (13, 23) in einem Fall des Empfangens des Steuerprogramms von der Repeatervorrichtung ein Schreibmittel zum Schreiben des Steuerprogramms in das zweite Speichermittel beinhaltet, und
wobei das Steuerprogramm dazu ausgelegt ist, die ersten Authentifizierungsinformationen, die im ersten Speichermittel gespeichert sind, zu verifizieren, wenn die Ausführung des Programms gestartet wird, und nur in einem Fall, in dem die ersten Authentifizierungsinformationen verifiziert werden, zuzulassen, dass das Programm kontinuierlich ausgeführt wird.

2. Steuerprogrammliefersystem (1) nach Anspruch 1,
wobei die Repeatervorrichtung (3) dazu ausgelegt ist, zusätzlich zu den ersten Authentifizierungsinformationen Vorrichtungsattributinformationen von der Steuervorrichtung (13, 23) zu empfangen und die ersten Authentifizierungsinformationen, die Vorrichtungsattributinformationen und die zweiten Authentifizierungsinformationen zum Server (5) zu übertragen,
wobei der Server (5) ferner Folgendes beinhaltet
ein drittes Speichermittel (52) zum Speichern eines Steuermoduls, das jedem Teil eines Vorrichtungsattributs entspricht; und
ein Programmerzeugungsmittel zum Extrahieren eines Steuermoduls, das dem Vorrichtungsattribut entspricht, vom Speichermittel auf Basis der Vorrichtungsattributinformationen, die von der Repeatervorrichtung empfangen werden, und Erzeugen eines angepassten Steuerprogramms, und
wobei der Server (5) dazu ausgelegt ist, das angepasste Steuerprogramm zur Repeatervorrichtung (3) zu übertragen.

3. Steuerprogrammliefersystem (1) nach Anspruch 2,
wobei der Server (5) ferner ein viertes Speichermittel (53) zum Verknüpfen und Speichern der ersten Authentifizierungsinformationen, der Vorrichtungsattributinformationen und der zweiten Authentifizierungsinformationen, die von der Repeatervorrichtung empfangen werden, beinhaltet.

4. Steuerprogrammliefersystem (1) nach Anspruch 3,
wobei eine Vielzahl von Steuervorrichtungen (13, 23) mit einem gemeinsam verwendeten Netzwerk (6) verbunden sind,
wobei die Repeatervorrichtung (3) dazu ausgelegt ist, die ersten Authentifizierungsinformationen und die Vorrichtungsattributinformationen von jeder der Steuervorrichtungen (13, 23), die mit dem Netzwerk (6) verbunden sind, zu empfangen, eine Vielzahl von Teilen der ersten Authentifizierungsinformationen und eine Vielzahl von Teilen der Vorrichtungsattributinformationen, die empfangen werden, und die zweiten Authentifizierungsinformationen zu verknüpfen und die verknüpften Informationen zum Server (5) zu übertragen,
wobei der Server (5) dazu ausgelegt ist, die Vielzahl von Teilen von ersten Authentifizierungsinformationen und die Vielzahl von Teilen von Vorrichtungsattributinformationen, die empfangen werden, und die zweiten Authentifizierungsinformationen zu verknüpfen und im vierten Speichermittel zu speichern und das angepasste Steuerprogramm, das jeder Steuervorrichtung entspricht, zur Repeatervorrichtung (3) zu übertragen, und
wobei die Repeatervorrichtung (3) dazu ausgelegt ist, das angepasste Steuerprogramm, das jeder Steuervorrichtung entspricht, zur Steuervorrichtung (13, 23) zu übertragen.

5. Steuerprogrammliefersystem (1) nach Anspruch 4,
wobei jede der Vielzahl von Steuervorrichtungen (13, 23) eine Innenmaschine (20) und eine Außenmaschine (10) beinhaltet.

6. Steuerprogrammlieferverfahren, das Folgendes umfasst:
einen Schritt des Übertragens von ersten Authentifizierungsinformationen zu einer Repeatervorrichtung (3), die zweite Authentifizierungsinformationen beinhaltet, durch eine Steuervorrichtung (13, 23), die ein nicht wiederbeschreibbares erstes Speichermittel (41) zum Speichern der ersten Authentifizierungsinformationen, die verschlüsselt sind, und ein wiederbeschreibbares zweites Speichermittel (42) beinhaltet;
einen Schritt des Übertragens der ersten Authentifizierungsinformationen und der zweiten Authentifizierungsinformationen durch die Repeatervorrichtung zu einem Server (5);
einen Schritt des Authentifizierens der ersten Authentifizierungsinformationen und der zweiten Authentifizierungsinformationen und des Verifizierens durch Decodieren der ersten Authentifizierungsinformationen und der zweiten Authentifizierungsinformationen, ob die Steuervorrichtung (13, 23) und die Repeatervorrichtung (3) die legitime Autorität aufweisen oder nicht, durch den Server, um zu bestimmen, ob die ersten Authentifizierungsinformationen und die zweiten Authentifizierungsinformationen in einer Liste, die sich im Besitz des Servers (5) befindet, vorhanden sind oder nicht;
einen Schritt des Lieferns eines Steuerprogramms, das vom Server (5) erzeugt wird und nicht auszuführen ist, wenn die ersten Authentifizierungsinformationen von der Steuervorrichtung nicht verifiziert werden, durch den Server an die Repeatervorrichtung (3) in einem Fall, in dem verifiziert wird, dass die Steuervorrichtung (13, 31) und die Repeatervorrichtung (3) die legitime Autorität aufweisen; und
einen Schritt des Übertragens des Steuerprogramms durch die Repeatervorrichtung (3) zur Steuervorrichtung (13, 31),
wobei das Steuerprogramm einen Schritt des Verifizierens der ersten Authentifizierungsinformationen, die im ersten Speichermittel gespeichert sind, wenn die Ausführung des Programms startet, und einen Schritt des Zulassens, dass das Programm nur kontinuierlich ausgeführt wird, wenn die ersten Authentifizierungsinformationen verifiziert werden, beinhaltet.

## Revendications

1. Système d'acheminement de programme de commande (1) comprenant :
un dispositif de commande (13, 23) comportant un premier moyen de stockage non réinscriptible (41) destiné à stocker des premières informations d'authentification qui sont chiffrées, et un deuxième moyen de stockage réinscriptible (42) ;
un dispositif répéteur (3) auquel sont attribuées des secondes informations d'authentification ; et
un serveur (5) destiné à acheminer un programme de commande,
dans lequel le dispositif répéteur (3) comporte :
un moyen de demande destiné à faire une demande de transmission des premières informations d'authentification, au dispositif de commande (13) ;
un premier moyen de transmission (31) destiné à transmettre les premières informations d'authentification qui sont reçues en provenance du dispositif de commande (13) et ses propres secondes informations d'authentification au serveur (5) ; et
un second moyen de transmission (32) destiné à transmettre le programme de commande au dispositif de commande (13, 23), en cas de réception du programme de commande en provenance du serveur (5),
dans lequel le serveur (5) comporte :
un moyen de réception destiné à recevoir les premières informations d'authentification et les secondes informations d'authentification en provenance du dispositif répéteur ;
un moyen d'authentification destiné à vérifier si le dispositif de commande et le dispositif répéteur disposent ou non de droits légitimes, en décodant les premières informations d'authentification et les secondes informations d'authentification pour déterminer si les premières informations d'authentification et les secondes informations d'authentification figurent ou non sur une liste détenue par le serveur (5) ; et
un moyen de transmission destiné à transmettre le programme de commande qui est généré par le serveur (5) pour ne pas être exécuté si les premières informations d'authentification ne sont pas vérifiées par le dispositif de commande, au dispositif répéteur, dans le cas où le dispositif de commande et le dispositif répéteur disposent de droits légitimes,
dans lequel le dispositif de commande (13, 23) comporte un moyen d'écriture destiné à écrire le programme de commande dans le deuxième moyen de stockage, en cas de réception du programme de commande en provenance du dispositif répéteur, et
dans lequel le programme de commande est conçu pour vérifier les premières informations d'authentification stockées dans le premier moyen de stockage, lorsque l'exécution du programme est démarrée, et pour ne permettre au programme de continuer à s'exécuter, que dans le cas où les premières informations d'authentification sont vérifiées.

2. Système d'acheminement de programme de commande (1) selon la revendication 1,
dans lequel le dispositif répéteur (3) est conçu pour recevoir des informations d'attribut de dispositif en provenance du dispositif de commande (13, 23), en plus des premières informations d'authentification, et pour transmettre les premières informations d'authentification, les informations d'attribut de dispositif, et les secondes informations d'authentification au serveur (5),
dans lequel le serveur (5) comporte en outre :
un troisième moyen de stockage (52) destiné à stocker un module de commande correspondant à l'attribut de chaque élément de dispositif ; et
un moyen de génération de programme destiné à extraire un module de commande correspondant à l'attribut de dispositif, depuis le moyen de stockage, sur la base des informations d'attribut de dispositif reçues en provenance du dispositif répéteur, et à générer un programme de commande personnalisé, et
dans lequel le serveur (5) est conçu pour transmettre le programme de commande personnalisé au dispositif répéteur (3).

3. Système d'acheminement de programme de commande (1) selon la revendication 2,
dans lequel le serveur (5) comporte en outre un quatrième moyen de stockage (53) destiné à associer et à stocker les premières informations d'authentification, les informations d'attribut de dispositif et les secondes informations d'authentification qui sont reçues en provenance du dispositif répéteur.

4. Système d'acheminement de programme de commande (1) selon la revendication 3,
dans lequel une pluralité de dispositifs de commande (13, 23) est connectée à un réseau partagé (6),
dans lequel le dispositif répéteur (3) est conçu pour recevoir les premières informations d'authentification et les informations d'attribut de dispositif en provenance de chacun des dispositifs de commande (13, 23) connectés au réseau (6), pour associer une pluralité d'éléments des premières informations d'authentification et une pluralité d'éléments des informations d'attributs de dispositifs qui sont reçues et les secondes informations d'authentification, et pour transmettre les informations associées au serveur (5),
dans lequel le serveur (5) est conçu pour associer et stocker la pluralité d'éléments de premières informations d'authentification et la pluralité d'éléments d'informations d'attributs de dispositifs qui sont reçues et les secondes informations d'authentification dans le quatrième moyen de stockage, et pour transmettre le programme de commande personnalisé correspondant à chaque dispositif de commande, au dispositif répéteur (3), et
dans lequel le dispositif répéteur (3) est conçu pour transmettre le programme de commande personnalisé correspondant à chaque dispositif de commande, à chaque dispositif de commande (13, 23).

5. Système d'acheminement de programme de commande (1) selon la revendication 4,
dans lequel chaque dispositif de la pluralité de dispositifs de commande (13, 23) comporte une machine intérieure (20) et une machine extérieure (10).

6. Procédé d'acheminement de programme de commande, comprenant :
une étape consistant à transmettre des premières informations d'authentification à un dispositif répéteur (3) comportant des secondes informations d'authentification, au moyen d'un dispositif de commande (13, 23) comportant un premier moyen de stockage non réinscriptible (41) destiné à stocker les premières informations d'authentification qui sont chiffrées, et un deuxième moyen de stockage réinscriptible (42) ;
une étape consistant à transmettre les premières informations d'authentification et les secondes informations d'authentification à un serveur (5), au moyen du dispositif répéteur ;
une étape consistant à authentifier, au moyen du serveur, les premières informations d'authentification et les secondes informations d'authentification et à vérifier si le dispositif de commande (13, 23) et le dispositif répéteur (3) disposent ou non de droits légitimes, en décodant les premières informations d'authentification et les secondes informations d'authentification pour déterminer si les premières informations d'authentification et les secondes informations d'authentification figurent ou non sur une liste détenue par le serveur (5) ;
une étape consistant à acheminer, au moyen du serveur, un programme de commande qui est généré par le serveur (5) pour ne pas être exécuté si les premières informations d'authentification ne sont pas vérifiées par le dispositif de commande, vers le dispositif répéteur (3), dans le cas où il est vérifié que le dispositif de commande (13, 31) et le dispositif répéteur (3) disposent des droits légitimes ; et
une étape consistant à transmettre le programme de commande au dispositif de commande (13, 31), au moyen du dispositif répéteur (3),
dans lequel le programme de commande inclut une étape consistant à vérifier les premières informations d'authentification stockées dans le premier moyen de stockage, lorsque l'exécution du programme démarre, et une étape consistant à ne permettre au programme de continuer à s'exécuter, que si les premières informations d'authentification sont vérifiées.
